(19) **Europäisches Patentamt**

**European Patent Office**

**Office européen des brevets**

(11) **EP 1 511 936 B1**

(12) **EUROPÄISCHE PATENTSCHRIFT**

(45) Veröffentlichungstag und Bekanntmachung des Hinweises auf die Patenterteilung:
**12.07.2006 Patentblatt 2006/28**

(51) Int Cl.:
**F04C 23/02** *(2006.01)*　　**F04C 18/12** *(2006.01)*

(21) Anmeldenummer: **03755115.7**

(22) Anmeldetag: **23.05.2003**

(86) Internationale Anmeldenummer:
**PCT/EP2003/005402**

(87) Internationale Veröffentlichungsnummer:
**WO 2003/100258 (04.12.2003 Gazette 2003/49)**

(54) **ZWEI-WELLEN-VAKUUMPUMPE MIT SYNCHRONMOTOR**

DUAL-SHAFT VACUUM PUMP WITH A SYNCHRONOUS MOTOR

POMPE A VIDE A DEUX ARBRES A MOTEUR SYNCHRONE

(84) Benannte Vertragsstaaten:
**CH DE FR GB IT LI**

(30) Priorität: **29.05.2002　DE 10223869**

(43) Veröffentlichungstag der Anmeldung:
**09.03.2005　Patentblatt 2005/10**

(73) Patentinhaber: **Leybold Vacuum GmbH
50968 Köln (DE)**

(72) Erfinder:
• **BAHNEN, Rudolf
52159 Roetgen (DE)**

• **HODAPP, Josef
50935 Köln (DE)**
• **RONTHALER, Karl-Heinz
53909 Zülpich (DE)**

(74) Vertreter: **Selting, Günther
Deichmannhaus am Dom,
Postfach 10 22 41
50462 Köln (DE)**

(56) Entgegenhaltungen:
　**EP-A- 0 678 966　　　　EP-A- 0 811 766
　EP-A- 1 065 777　　　　DE-A- 3 150 393
　US-A- 2 640 428　　　　US-A- 4 734 633
　US-A- 5 779 453**

## Beschreibung

Die Erfindung bezieht sich auf eine Zwei-Wellen-Vakuumpumpe mit zwei Wellen.

Eine typische Zwei-Wellen-Vakuumpumpe ist die Wälzkolbenpumpe, auch Roots-Pumpe genannt. Beide Wellen der Wälzkolbenpumpe weisen jeweils einen Drehkolben auf, die gegenseitig berührungsfrei abwälzen. Eine der beiden Wellen wird durch einen elektrischen Antriebsmotor angetrieben, während die andere Welle durch ein Getriebe mit der einen Antriebswelle synchronisiert ist. Während des Pumpbetriebes werden die Wälzkolben durch die Gaskompression stark erwärmt.

Als Antriebsmotoren werden wegen der einfachen Steuer- und Regelbarkeit in der Praxis ausschließlich Asynchronmotoren eingesetzt. Der auf der Antriebswelle sitzende Motorrotor des Asynchronmotors ist als sogenannter Käfigläufer ausgebildet. Der als Käfigläufer ausgebildete Motorrotor hat eine relativ große Masse und axiale Baulänge. Wegen der hieraus zwangsläufig resultierenden großen Unwucht-Kräfte und der daraus resultierenden Vibrationen muss die Antriebswelle im Bereich des Antriebsmotors mit mindestens einem Stützlager abgestützt werden. Die Kühlung und die Schmierung des bzw. der Stützlager ist insbesondere aufgrund ihrer Anordnung im gasdicht abgedichteten Bereich der Vakuumpumpe problematisch und nur mit hohem Aufwand realisierbar.

In EP-A-0 678 966 und EP-A-0 811 766 werden jeweils Zwei-Wellen-Vakuumpumpen offenbart, die durch einen bürstenlosen DC-Antriebsmotor angetrieben werden. Bürstenlose DC-Antriebsmotoren werden in der Regel bei konstanter Drehzahl mit konstantem Drehmoment gefahren. Aus der letztgenannten Druckschrift ist ferner bekannt, beim Starten der Vakuumpumpe bzw. bei hohen Eingangsdrücken die Motor-Drehzahl zu reduzieren und ein erhöhtes Drehmoment zur Verfügung zu stellen.

Aus DE-A-38 28 608, die den Stand der Technik offenbart, von der der Oberbegriff des Anspruches 1 ausgeht, ist eine Vakuum-Wälzkolbenpumpe bekannt, die durch einen Synchronmotor angetrieben wird. Die konkrete Ausbildung des Motorrotors ist nicht beschrieben. Synchronmotoren sind für Vakuumpumpen prinzipiell ungeeignet, da der Motorrotor über wärmeerzeugende Schleifkontakte fremderregt wird. Ein permanenterregter Synchronmotor-Rotor ist ungeeignet, da er durch die konstante Rotorerregung ein über die Drehzahl konstantes Drehmoment liefert und bei höheren Drehzahlen eine Überhitzung des Pumpenrotors droht. In der Praxis werden daher keine Synchronmotoren zum Antrieb von Vakuumpumpen eingesetzt.

Aufgabe der Erfindung ist es, eine Zwei-Wellen-Vakuumpumpe mit einem verbesserten Antrieb zu schaffen.

Diese Aufgabe wird erfindungsgemäß mit den Merkmalen des Anspruchs 1 gelöst.

Gemäß der Erfindung ist der Antriebsmotor ein Synchronmotor, wobei der Rotor durch mindestens einen Permanentmagneten permanent erregt ausgebildet ist. Der permanent erregte Rotor eines Synchronmotors ist wegen seines konstant starken Magnetfeldes und der geringen Verlustleistung von geringer Masse und geringer Baulänge. Hierdurch können gegebenenfalls alle Wellen-Stützlager zur zusätzlichen Abstützung der Antriebswelle entfallen, wodurch auch die mit der Kühlung und Schmierung der Stützlager verbundenen Probleme entfallen.

Durch die geringere Verlustleitung in dem permanent erregten Rotor sind auch die Erwärmung des Rotors und die damit verbundenen Probleme verringert.

Ferner ist ein Synchronmotor-Leistungsbegrenzer vorgesehen, der in einem oberhalb einer festgelegten Motor-Nenndrehzahl liegenden Begrenzerbereich die Motorleistung auf eine festgelegte maximale Motorleistung begrenzt. Der Leistungsbegrenzer begrenzt die Antriebsleistung bei einer Drehzahl oberhalb der Nenndrehzahl auf einen konstanten Wert. Dies erfolgt dadurch, dass das Drehmoment bei einer Wellen-Drehzahl oberhalb der Nenndrehzahl reduziert ist.

Die Motorleistung ergibt sich aus

$$P_M \;=\; M_M \;\times\; \omega,$$

wobei

$\omega = 2\pi \cdot n$
$P_M$ die Motorleistung
$M_M$ das Motor-Drehmoment bei der Drehzahl n und n die Motordrehzahl ist.

Durch die Drehmoment-Reduzierung im Begrenzerbereich wird sichergestellt, dass die Pumpe auch bei hohen Drehzahlen von bis zu 8.000 Umdrehungen pro Minute arbeiten kann, jedoch die Pumpleistung auf einen konstanten Maximalwert begrenzt ist. Die Wärmeabführungsmöglichkeiten zur Abführung der Wälzkolbenwärme sind wegen des geringen Gasdruckes und konstruktionsbedingt sehr eingeschränkt. Durch Begrenzung der Motorleistung und damit der Pumpleistung ohne gleichzeitige Drehzahlbegrenzung wird eine Überhitzung der Vakuumpumpe und insbesondere der Wälzkolben zuverlässig vermieden, wobei gleichzeitig ein hoher Gas-Volumenstrom ermöglicht bleibt. Der Synchronmotor wird im Begrenzerbereich im sogenannten Feldschwächbereich betrieben. Der magnetische Fluss des permanentmagnetischen Motorrotors ist konstant, so dass eine Änderung des Motordrehmomentes nur durch eine entsprechende Steuerung des Statorfeldes erfolgen kann.

Permanenterregte Motorrotoren in Vakuumpumpen wurden in der Praxis bisher nicht verwendet, weil durch das über den gesamten Drehzahlbereich prinzipbedingt gleichbleibende Drehmoment bei hohen Drehzahlen eine Überhitzungsgefahr für den Rotor durch mit der Drehzahl zunehmende Kompressionswärme bestand. Diese Nachteile ließen es bisher abwegig bzw. unmöglich erscheinen, zum Antrieb einer Vakuumpumpe einen permanenterregten Synchronmotor einzusetzen. Durch die Begrenzung der Motorleistung im Begrenzerbereich durch Feldschwächbetrieb wird die kompressionsbedingte Erwärmung des Motorrotors bei größeren Drehzahlen auf einen konstanten Wert begrenzt. Erst hierdurch wird die Verwendung eines permanenterregten Synchronmotors zum Antrieb einer Vakuumpumpe ermöglicht und sinnvoll, wobei bis zum Erreichen des Begrenzerbereiches das maximale Drehmoment des Motors genutzt werden kann.

Gemäß einer bevorzugten Ausgestaltung stellt der Leistungsbegrenzer im Begrenzerbereich den Phasenwinkel zwischen dem elektrischen Statorfeld und dem Motor-Magnetfeld auf einen von 90 Grad verschiedenen Winkel ein. Das elektrische Statorfeld wird mit seiner Phasenlage gegenüber dem Rotor-Magnetfeld derart eingestellt, dass das Drehmoment entsprechend reduziert ist.

Alternativ oder ergänzend reduziert der Leistungsbegrenzer im Begrenzerbereich den Betrag des Statorstroms. Auch hierdurch wird das Drehmoment $M_M$ reduziert, das proportional zum Statorstrom ist.

Gemäß einer bevorzugten Ausgestaltung stellt der Leistungsbegrenzer im Begrenzerbereich den Phasenwinkel bzw. den Statorstrom drehzahlabhängig ein. Mit zunehmender Drehzahl im Begrenzerbereich zwischen der Nenndrehzahl und der maximalen Drehzahl wird der Phasenwinkel bzw. der Statorstrom so verändert, dass das Drehmoment mit zunehmender Drehzahl derart abnimmt, dass die Motorleistung oberhalb der Nenndrehzahl stets annähernd konstant ist. Hierdurch wird bei jeder Drehzahl die maximal zulässige Motorleistung zur Verfügung gestellt, jedoch nicht überschritten. Die Vakuumpumpe ist vor Überhitzung geschützt.

Gemäß einer bevorzugten Ausgestaltung ist die den Motorrotor aufweisende Welle am motorseitigen Ende fliegend und stützlagerfrei gelagert. Die Welle wird ausschließlich von den beiden Hauptlagern gelagert, die an beiden Längsenden des Pumpenrotors angeordnet sind. Die mit der Kühlung und Schmierung von Motor-Stützlagern verbundenen Konstruktionen entfallen.

Vorzugsweise weist der Motorrotor mehrere Permanentmagneten auf, die an der Außenseite des Motorrotorkörpers angeordnet sind. Es kann auch ein oder können mehrere Permanentmagneten in entsprechenden Ausnehmungen des Motorrotorkörpers angeordnet sein.

Vorzugsweise weist der Motorrotor insbesondere für den Betrieb mit für die Motormaterialien schädlichen Gasen eine Rotorkapsel aus einem nichtmagnetischen Material auf, die den Motorrotorkörper und die Permanentmagneten außen umgibt. Hierdurch werden die außen an dem Motorrotorkörper angeordneten Permanentmagneten gesichert und vor gegebenenfalls aggressiven Gasen und Flüssigkeiten und somit vor Korrosion geschützt. Die Rotorkapsel kann aus einem nichtmagnetischen Metall oder aus Kunststoff bestehen.

Gemäß einer bevorzugten Ausgestaltung ist statorseitig ein Spalttopf aus einem nichtmagnetischen Material vorgesehen, der den Rotor gegenüber dem Stator gasdicht verschließt. Der Spalttopf besteht aus einem nichtmagnetischen Metall oder Kunststoff. Durch den Spalttopf wird der Pumpenbereich gasdicht gegenüber der Umgebung abgeschlossen, wobei der Motorrotor innerhalb des Pumpenbereiches und der Motorstator außerhalb des Pumpenbereiches liegen. Durch die Verwendung eines permanent erregten Synchronmotors kann der Spalt zwischen Rotor und Stator relativ groß ausgebildet sein. Hierdurch wird der Einsatz eines Spalttopfes erleichtert.

Gemäß einer bevorzugten Ausgestaltung sind ein den Spalttopf haltender Pumpendeckel und ein den Motorstator umgebendes Statorgehäuse einstückig miteinander ausgebildet. Hierdurch wird die Anzahl der Bauteile und die Anzahl der Fügestellen reduziert.

Vorzugsweise besteht der Permanentmagnet aus seltenen Erden. Mit Permanentmagneten aus seltenen Erden können starke Magnetfelder von langer Dauer bei kleiner Baugröße realisiert werden.

Im Folgenden wird unter Bezugnahme auf die Zeichnungen ein Ausführungsbeispiel der Erfindung näher erläutert.

Es zeigen:

Fig. 1 eine Zwei-Wellen-Vakuumpumpe im Längsschnitt,

Fig. 2 ein Detail des Antriebsmotors der Vakuumpumpe der Figur 1, und

Fig. 3 ein Diagramm mit der Motorleistung, dem Motordrehmoment der Pumpen-Momentenkennlinie und der Pumpenleistung für die Vakuumpumpe der Figuren 1 und 2 mit einem 4,8 kW Antriebsmotor.

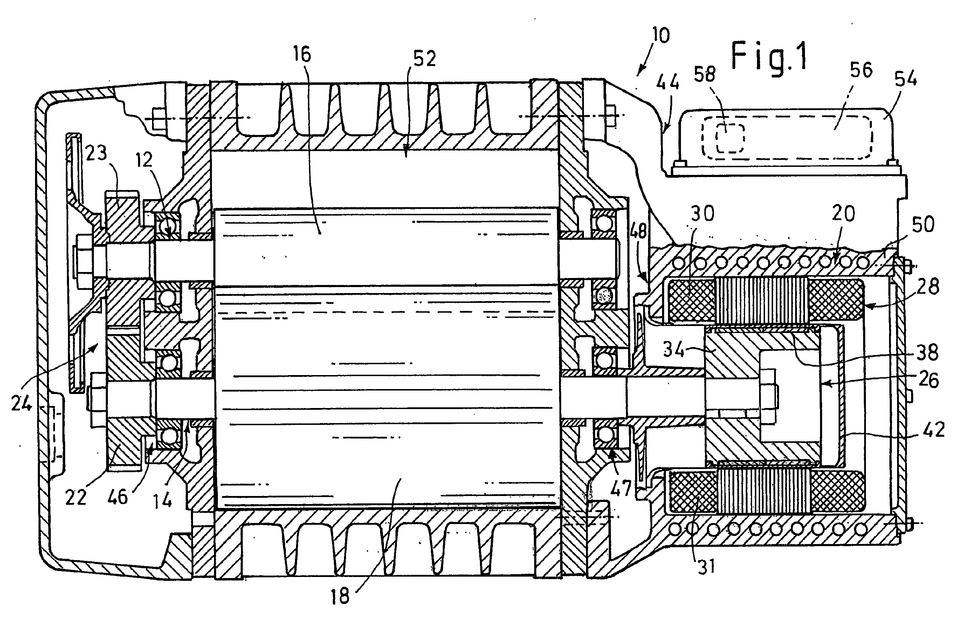

In Figur 1 ist eine als Wälzkolbenpumpe ausgebildete Zwei-Wellen-Vakuumpumpe 10 dargestellt, die zwei Rotor-Wellen 12, 14 aufweist. Jede Rotor-Welle 12, 14 weist einen als Wälzkolben ausgebildeten Pumpenrotor 16, 18 auf. Eine Rotor-Welle 14 ist durch einen elektrischen Antriebsmotor 20 angetrieben, während die andere Welle 12 über ein von zwei Zahnrädern 22, 23 gebildetes Getriebe 24 angetrieben und mit der einen Rotor-Welle 14 synchronisiert ist.

Der Antriebsmotor 20 ist ein Synchronmotor und wird im Wesentlichen gebildet von einem permanent erregten Motorrotor 26 und einem mehrere Statorspulen 30, 31 aufweisenden Motorstator 28.

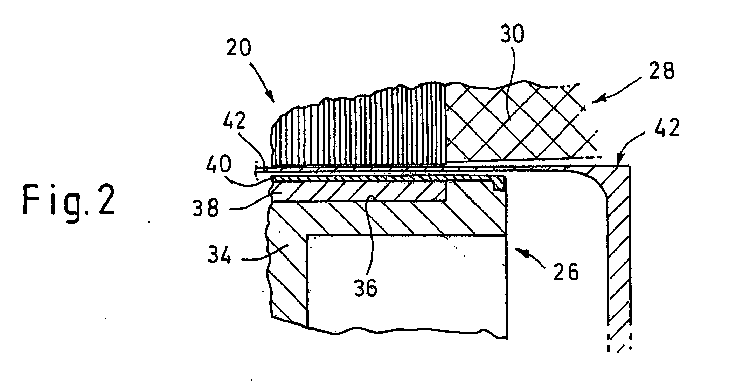

Der Aufbau des Motorrotors 26 ist vergrößert in Figur 2 dargestellt: Der Motorrotor 26 besteht aus einem topfförmigen Rotorkörper 34, der an seinem Außenumfang mehrere Ausnehmungen 36 aufweist, in die jeweils ein aus seltenen Erden bestehender Permanentmagnet 38 eingeklebt ist. Der gesamte Außenumfang des Rotors 26 wird von einer zylindrischen Rotorkapsel 40 aus einem nichtmagnetischen Material umgeben. Die Rotorkapsel 40 hält die Permanentmagnete 38 auch bei hohen Rotordrehzahlen in den Ausnehmungen 36 und schirmt die Permanentmagnete 38 zuverlässig ab gegen korrosionsfördernde Gase und Flüssigkeiten. Die Rotorkapsel 40 besteht aus nichtmagnetischem Edelstahl, kann jedoch auch aus CFK oder anderen nichtmagnetischen Materialien bestehen. Der Rotorkörper 34 kann geblecht oder massiv ausgebildet sein. Zwischen dem Rotor 26 und dem Stator 28 ist ein topfartig ausgebildeter Spalttopf 42 vorgesehen, der statorseitig mit einem Motorgehäuse 44 verbunden ist. Der Spalttopf dichtet den Motorrotor 26 gegenüber dem Stator 28 gasdicht ab. Der Spalttopf 42 besteht aus nichtmagnetischem Edelstahl, kann jedoch auch aus CFK oder anderen nichtmagnetischen Materialien bestehen.

Der Motorrotor 26 ist durch seine Auslegung als mit Permanentmagneten 38 permanent erregter Rotor einer Synchronmaschine von geringer axialer Baulänge und geringer Masse. Hierdurch wird ermöglicht, dass die den Motorrotor 26 tragende Welle 14 alleine durch zwei Pumpenrotor-Wälzlager 46, 47 getragen wird und ihr motorseitiges Ende stützlagerfrei ausgebildet ist. Der Motorrotor 26 ist also vollständig fliegend gelagert.

Das Motorgehäuse 44 ist einstückig ausgebildet und weist einen den Spalttopf 42 haltenden Pumpendeckel 48 und ein den Motorstator 28 umgebendes Statorgehäuse 50 auf. Der Pumpendeckel 48 hält den Spalttopf 42 und dichtet den Schöpfraum 52 nach außen gasdicht ab. In einem aufgesetzten Gehäuse 54 an der Außenseite des Motorgehäuses 44 ist eine Motorsteuerung 56 untergebracht. Die Motorsteuerung 56 steuert und regelt die Versorgung der Statorspulen 30, 31.

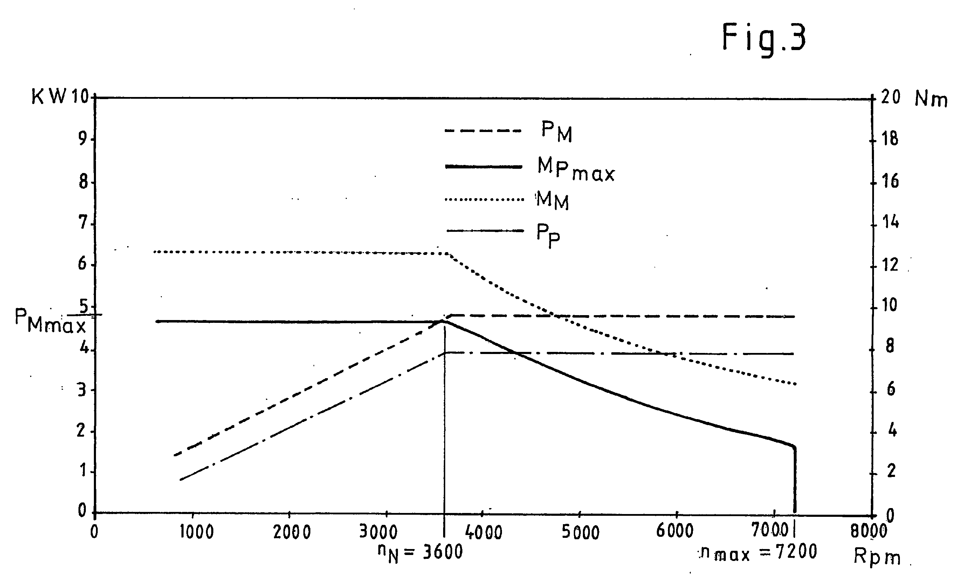

Die Motorsteuerung 56 umfasst einen Synchronmotor-Leistungsbegrenzer 58, durch den oberhalb einer festgelegten Motor-Nenndrehzahl $n_N$ die Motorleistung $P_M$ auf eine festgelegte maximale Motorleistung $P_{Mmax}$ begrenzt, wie in Figur 3 dargestellt . Hierdurch wird auch die maximale Pumpenleistung auf einen Maximalwert begrenzt. Dies ist erforderlich, um eine Überhitzung der Pumpenrotoren 16, 18 zu vermeiden. Die Motorsteuerung 56 umfasst ferner einen Frequenzumrichter zum Anfahren des Antriebsmotors und zur Drehzahlregelung.

Die Motorleistung $P_M$ ergibt sich aus

$$P_M = \omega \cdot M_M,$$

wobei $\omega = 2\pi \cdot n$ und n die Drehzahl und $M_M$ das Motor-Drehmoment ist. Bei steigender Drehzahl kann die Motorleistungsbegrenzung also nur durch Reduzieren des Motordrehmoments $M_M$ erfolgen.

Der Drehzahlbereich zwischen der Nenndrehzahl $n_N$, bei der die maximale Motorleistung $P_{Mmax}$ erreicht ist, und der Maximaldrehzahl $n_{max}$ wird Begrenzerbereich genannt. Da der von dem permanent erregten Motorrotor 26 erzeugte magnetische Fluss stets konstant ist, kann das Drehmoment im Begrenzerbereich nur durch eine entsprechende Regelung der Statorspulen 30, 31 erfolgen. Im Begrenzerbereich werden die Statorspulen 30, 31 daher derart angesteuert, dass das Drehmoment mit zunehmender Drehzahl und umgekehrt proportional zur Drehzahl verringert ist. Der Antriebsmotor 20 wird im Begrenzerbereich im sogenannten Feldschwächbereich betrieben.

Hierzu wird im Begrenzerbereich der Statorstrom entsprechend der erforderlichen Drehmomentreduzierung reduziert. Alternativ oder ergänzend kann der Leistungsbegrenzer 58 im Begrenzerbereich den Phasenwinkel zwischen dem Motor-Magnetfeld und dem elektrischen Statorfeld auf einen von 90° verschiedenen Winkel einstellen. Die Regelung des Motorstromes bzw. des Phasenwinkels im Begrenzerbereich erfolgt stets drehzahlabhängig.

Wie in Figur 3 erkennbar, liegt das Pumpendrehmoment Mp und die Pumpenleistung Pp durch Reibungsverluste etc. stets etwas unterhalb des Motor-Drehmoments $M_M$ bzw. der Motorleistung $P_M$. Eine Überhitzung des Pumpenrotors ist bei richtiger Bemessung und Einstellung der maximalen Pumpen- bzw. Motorleistung ausgeschlossen.

## Patentansprüche

1. Zwei-Wellen-Vakuumpumpe mit zwei Wellen (12, 14), wobei eine der Wellen (14) durch einen elektrischen Antriebsmotor (20) angetrieben ist und einen Motorrotor (26) aufweist,
   wobei der Antriebsmotor (20) ein Synchronmotor ist, **dadurch gekennzeichnet,**
   **dass** der Motorrotor (26) permanent erregt ausgebildet ist, und
   **dass** ein Synchronmotor-Leistungsbegrenzer (58) vorgesehen ist, der in einem oberhalb einer festgelegten Motor-Nenndrehzahl ($n_N$) liegenden Begrenzerbereich die Motorleistung ($P_M$) auf eine festgelegte maximale Motorleistung ($P_{Mmax}$) begrenzt.

2. Zwei-Wellen-Vakuumpumpe nach.Anspruch 1, **dadurch gekennzeichnet, dass** der Leistungsbegrenzer (58) im Begrenzerbereich den Phasenwinkel zwischen dem Rotor-Magnetfeld und dem elektrischen Statorfeld auf einen von 90 Grad verschiedenen Winkel einstellt.

3. Zwei-Wellen-Vakuumpumpe nach Anspruch 1, **dadurch gekennzeichnet, dass** der Leistungsbegrenzer (58) im Begrenzerbereich den Statorstrom reduziert.

**4.** Zwei-Wellen-Vakuumpumpe nach Anspruch 1 oder 2, **dadurch gekennzeichnet, dass** der Leistungsbegrenzer (58) im Begrenzerbereich den Phasenwinkel zwischen dem Rotor-Magnetfeld und dem elektrischen Statorfeld bzw. den Statorstrom drehzahlabhängig einstellt.

**5.** zwei-Wellen-Vakuumpumpe nach einem der Ansprüche 1-4, **dadurch gekennzeichnet, dass** die angetriebene Rotor-Welle (14) am motorseitigen Ende fliegend und stützlagerfrei gelagert ist.

**6.** Zwei-Wellen-Vakuumpumpe nach einem der Ansprüche 1-5, **dadurch gekennzeichnet, dass** der Motorrotor (26) mehrere Permanentmagnete (38) aufweist, die an der Außenseite des Motorrotorkörpers (34) angeordnet sind..

**7.** zwei-Wellen-Vakuumpumpe nach Anspruch 6, **dadurch gekennzeichnet, dass** der Motorrotor (26) eine Rotorkapsel (40) aus einem nichtmagnetischen Material aufweist, die den Motorrotorkörper (34) und die Permanentmagnete (38) außen umgibt.

**8.** Zwei-Wellen-Vakuumpumpe nach einem der Ansprüche 1-7, **dadurch gekennzeichnet, dass** statorseitig ein Spalttopf (42) aus einem nichtmagnetischen Material vorgesehen ist, der den Motorrotor (26) gegenüber dem Motorstator (28) gasdicht verschließt.

**9.** Zwei-Wellen-Vakuumpumpe nach Anspruch 8, **dadurch gekennzeichnet, dass** ein den Spalttopf (42) haltender Pumpendeckel (48) und ein den Motorstator (28) umgebendes Statorgehäuse (50) einstückig miteinander ausgebildet sind.

**10.** Zwei-Wellen-Vakuumpumpe nach einem der Ansprüche 7-9, **dadurch gekennzeichnet, dass** die Rotor-Permanentmagnete (38) aus seltenen Erden bestehen.

**Claims**

**1.** A two-shaft vacuum pump comprising two shafts (12,14), wherein one of the shafts (14) is driven by an electric drive motor (20) and comprises a motor rotor (26),
wherein the drive motor (20) is a synchronous motor, **characterized in that**
the motor rotor (26) is permanently excited, and
a synchronous motor power-limiting device (58) is provided which limits the motor power ($P_M$) to a fixed maximum motor power ($P_{Mmax}$) in a limiting range above a fixed rated motor speed ($n_N$).

**2.** The two-shaft vacuum pump according to claim 1,
**characterized in that** the power-limiting device (58) adjusts, in the limiting range, the phase angle between the magnetic field of the rotor and the electrical stator field to an angle other than 90°.

**3.** The two-shaft vacuum pump according to claim 1, **characterized in that** the power-limiting device (58) reduces the stator current in the limiting range.

**4.** The two-shaft vacuum pump according to claim 1 or 2, **characterized in that** the power-limiting device (58) adjusts, in the limiting range, the phase angle between the magnetic field of the rotor and the electrical stator field and/or the stator current as a function of the speed.

**5.** The two-shaft vacuum pump according to one of claims 1-4, **characterized in that** the driven rotor shaft (14) is of overhung configuration and supported without a supporting bearing on the motor-side end.

**6.** The two-shaft vacuum pump according to one of claims 1-5, **characterized in that** the motor rotor (26) comprises a plurality of permanent magnets (38) arranged on the outside of the motor rotor body (34).

**7.** The two-shaft vacuum pump according to claim 6, **characterized in that** the motor rotor (26) comprises a rotor enclosure (40) of a nonmagnetic material which externally encloses the motor rotor body (34) and the permanent magnets (38).

**8.** The two-shaft vacuum pump according to one of claims 1-7, **characterized in that** on the stator side a separating can (42) of a nonmagnetic material is provided which gas-tightly seals the motor rotor (26) towards the motor stator (28).

**9.** The two-shaft vacuum pump according to claim 8, **characterized in that** a pump cover (48) holding the separating can (42) and a stator casing (50) surrounding the motor stator (28) are integrally formed.

**10.** The two-shaft vacuum pump according to one of claims 7-9, **characterized in that** the permanent magnets (38) of the rotor are made of rare earths.

**Revendications**

**1.** Pompe à vide à deux arbres, comprenant deux arbres (12, 14), l'un des arbres (14) étant entraîné par un moteur d'entraînement électrique (20) et présentant un rotor de moteur (26),
le moteur d'entraînement (20) étant un moteur synchrone,
**caractérisée en ce que**
le rotor de moteur (26) est configuré de manière à être excité en permanence et

un limiteur de puissance du moteur synchrone (58) est prévu pour limiter la puissance du moteur ($P_M$), dans une plage de limitation située au-dessus d'un régime nominal déterminé du moteur ($n_N$), à une puissance de moteur maximale déterminée ($P_{Mmax}$).

2. Pompe à vide à deux arbres selon la revendication 1, **caractérisée en ce que**

   le limiteur de puissance (58), dans la plage de limitation, règle l'angle de phase entre le champ magnétique du rotor et le champ électrique du stator à un angle différent de 90 degrés.

3. Pompe à vide à deux arbres selon la revendication 1, **caractérisée en ce que**

   le limiteur de puissance (58), dans la plage de limitation, réduit le courant du stator.

4. Pompe à vide à deux arbres selon la revendication 1 ou 2,

   **caractérisée en ce que**

   le limiteur de puissance (58), dans la plage de limitation, règle l'angle de phase entre le champ magnétique du rotor et le champ électrique du stator ou le courant du stator en fonction du régime.

5. Pompe à vide à deux arbres selon l'une des revendications 1 à 4,

   **caractérisée en ce que**

   l'arbre de rotor entraîné (14) est logé de manière flottante et sans palier d'appui au niveau de l'extrémité côté moteur.

6. Pompe à vide à deux arbres selon l'une des revendications 1 à 5,

   **caractérisée en ce que**

   le rotor du moteur (26) présente plusieurs aimants permanents (38) disposés au niveau du côté extérieur du corps du rotor du moteur (34).

7. Pompe à vide à deux arbres selon la revendication 6, **caractérisée en ce que**

   le rotor du moteur (26) présente une capsule de rotor (40) faite d'un matériau non magnétique, qui entoure sur l'extérieur le corps du rotor du moteur (34) et les aimants permanents (38).

8. Pompe à vide à deux arbres selon l'une des revendications 1 à 7,

   **caractérisée en ce qu'**

   il est prévu du côté du stator un pot de séparation (42) fait d'un matériau non magnétique, qui ferme le rotor du moteur (26) de manière étanche par rapport au stator du moteur (28).

9. Pompe à vide à deux arbres selon la revendication 8, **caractérisée en ce qu'**

un couvercle de pompe (48) maintenant le pot de séparation (42) et un boîtier de stator (50) entourant le stator du moteur (28) sont réalisés en une seule pièce.

10. Pompe à vide à deux arbres selon l'une des revendications 7 à 9,

    **caractérisée en ce que**

    les aimants permanents du rotor (38) se composent de terres rares.

Fig.1

EP 1 511 936 B1

EP 1 511 936 B1

# Fig.2

Fig.3

EP 1 511 936 B1